# EUROPEAN PATENT SPECIFICATION

(11) **EP 3 907 845 B1**
(45) Date of publication and mention of the grant of the patent: **13.11.2024**
(21) Application number: 21173119.5
(22) Date of filing: 10.05.2021
(51) Int. Cl.: H02J 3/38, H02P 9/00, B64D 41/00

(54) **AUXILIARY POWER UNIT GENERATOR SYSTEMS**
GENERATORSYSTEME MIT HILFSSTROMAGGREGAT
SYSTÈMES DE GÉNÉRATEUR D'UNITÉ DE PUISSANCE AUXILIAIRE

(30) Priority: 08.05.2020 US 202063022239 P
(43) Date of publication of application: 10.11.2021
(73) Proprietor: Hamilton Sundstrand Corporation, Charlotte, NC 28217-4578 (US)
(72) Inventor: KOENIG, Andreas C., Illinois, 61114 (US); HAGSHENAS, Behzad, San Diego, 92127 (US)
(74) Representative: Dehns

(56) References cited:
- EP-A1- 2 541 723
- EP-A1- 3 101 252
- WO-A1-2017/164977
- GB-A- 2 510 121
- US-A1- 2017 264 101
- ELBULUK M E ET AL: "Potential starter/generator technologies for future aerospace applications", AEROSPACE AND ELECTRONICS CONFERENCE, 1996. NAECON 1996., PROCEEDINGS OF THE IEEE 1996 NATIONAL, IEEE, 20 May 1996 (1996-05-20), pages 75 - 82vol.1, XP032391858, ISBN: 978-0-7803-3306-2, DOI: 10.1109/NAECON.1996.517619

## Description

### FIELD

This disclosure relates to auxiliary power unit generator systems.

### BACKGROUND

An auxiliary power unit (APU) for constant frequency aircraft power systems generally spins a synchronous generator at a constant speed to produce a constant frequency output. Accordingly, APU's are limited to constant speed operation which does not account for the environmental condition, sacrificing efficiency.

Such conventional methods and systems have generally been considered satisfactory for their intended purpose. However, there is still a need in the art for APU generator systems. The present disclosure provides a solution for this need. US 2017/264 101 A1 describes a DFIG-based UPS system and methods of control. GB 2 510 121 A1 describes an electrical system for an aircraft and a method of control. EP 2 541 723 A1 describes an electrical distribution system. WO2017/164977 A1 describes a power generation system having variable speed engine and method or cranking the variable speed engine. EP 3 101 252 A1 describes engine speed optimization as a method to reduce APU fuel consumption.

### SUMMARY

An auxiliary power unit (APU) generator system for an APU can include a doubly-fed induction generator (DFIG) configured to be operatively connected to an APU to be turned by an APU and to have an output frequency that is a function of an excitation frequency and an APU speed. The system can include a generator control module configured to control the excitation frequency to the DFIG to output a substantially constant frequency with changing APU speed to supply the substantially constant frequency to a load.

The generator control module can be operatively connected to an output line to sense the output frequency of the DFIG. The substantially constant frequency can be within about 5% of a set frequency.

The system can include an APU control module configured to control the APU speed to obtain an efficiency of the APU. The efficiency of the APU can be an optimum fuel efficiency as a function of one or more environmental conditions, for example. Any other suitable desired efficiency is contemplated herein.

The one or more environmental conditions can include ambient temperature and/or density altitude, for example. Any suitable one or more environmental conditions are contemplated herein.

The APU control module can be configured to control the APU speed by controlling a fuel flow to the APU. In certain embodiments, the system can include the APU.

In accordance with at least one aspect of this disclosure, a method controlling a speed of an auxiliary power unit (APU) system to optimize fuel efficiency as a function of one or more environmental conditions, and controlling an output frequency of a doubly-fed induction generator (DFIG) turned by the APU to be a substantially constant frequency. Controlling the output frequency of the DFIG can include modifying an excitation frequency to maintain the substantially constant frequency. Controlling the output frequency of the DFIG can include sensing the output frequency of the DFIG. In certain embodiments, controlling the speed of the APU can include controlling a fuel flow to the APU.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:

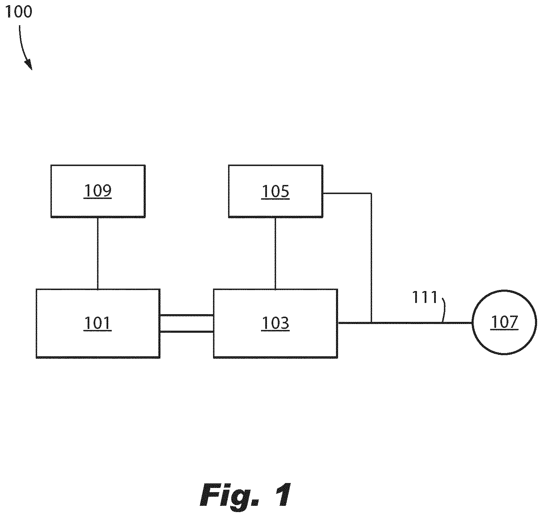

Fig. 1 is a schematic diagram of an embodiment of a system in accordance with this disclosure.

### DETAILED DESCRIPTION

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Certain embodiments described herein can be used to provide more efficient aircraft system, for example. Any other suitable use is contemplated herein.

Referring to Fig. 1, an auxiliary power unit (APU) generator system 100 for an APU 101 can include a doubly-fed induction generator (DFIG) 103 configured to be operatively connected to an APU 101 to be turned by the APU 101. The DFIG 103 can be configured to have an output frequency that is a function of an excitation frequency and an APU speed. For example, the DFIG generator can include a 3-phase winding on a generator rotor and a 3-phase winding on a generator stator. A frequency input to the rotor and the speed of rotation of the rotor can dictate the output frequency of the DFIG 103, for example. Any other suitable configuration for the DFIG 103 is contemplated herein.

The system 100 can include a generator control module 105 configured to control the excitation frequency to the DFIG 103 to output a substantially constant frequency with changing APU speed to supply the substantially constant frequency to a load 107 (e.g., an aircraft electrical system that may require a constant frequency). In certain embodiments, the generator control module 105 can be configured to maintain a substantially constant output voltage as well. The term "substantially constant" herein means a constant value or any value within an acceptable range of the constant value. For example, the substantially constant frequency can be within about 5% of a set frequency (e.g., within 20Hz of 400Hz desired frequency).

The generator control module 105 can be operatively connected to an output line 111 to sense the output frequency of the DFIG 103. In certain embodiments, the generator control module 105 can be configured to control the excitation frequency as a function of speed of the APU 101 and/or the rotor of the DFIG 103. For example, the generator control module 105 can include a speed/frequency map configured to provide a predetermined frequency as a function of the known or sensed APU speed.

The system 100 includes an APU control module 109 configured to control the APU speed to obtain an efficiency of the APU 101. The efficiency of the APU 101 is an optimum fuel efficiency as a function of one or more environmental conditions.

The one or more environmental conditions include ambient temperature and/or density altitude.

The APU control module 109 can be configured to control the APU speed by controlling a fuel flow to the APU. In certain embodiments, the system can include the APU 101.

The APU control module 109 and the generator control module 105 can be or include any suitable hardware and/or software module(s). In certain embodiments, the APU control module 109 and the generator control module 105 can be software modules hosted on the same hardware. In certain embodiments, the APU control module 109 and the generator control module 109 can communicate with each other such that the generator control module 105 can receive a speed setting from the APU control module 109 and can modify excitation frequency to the DFIG 103 accordingly.

In accordance with at least one aspect of this disclosure, an aircraft auxiliary power unit (APU) system can include an APU, and an auxiliary power unit (APU) generator system connected to the APU. The APU generator system can include any suitable generator system disclosed herein, e.g., as described above.

In accordance with at least one aspect of this disclosure, a method controlling a speed of an auxiliary power unit (APU) system to optimize fuel efficiency as a function of one or more environmental conditions, and controlling an output frequency of a doubly-fed induction generator (DFIG) turned by the APU to be a substantially constant frequency. Controlling the output frequency of the DFIG can include modifying an excitation frequency to maintain the substantially constant frequency. Controlling the output frequency of the DFIG can include sensing the output frequency of the DFIG. In certain embodiments, controlling the speed of the APU can include controlling a fuel flow to the APU.

Many devices on aircraft require constant frequency input to operate. Certain aircraft systems traditionally operate at 400Hz. The APU operation can be more fuel efficient if it could adjust speed based on environmental condition. However, the APU generator is traditionally a direct-drive synchronous type where the output frequency is proportional to the input speed of the generator. Therefore, adjusting the speed of the APU would cause the generator frequency to vary outside of the acceptable range. However, there is no way to modify speed (by using fuel flow) of the APU traditionally without modifying the output of the synchronous generator outside of suitable range. An IDG type generator which takes variable input speed and outputs a constant frequency relies on a hydromechanical device that is not desired due to complexity, efficiency, and reliability issues. A VSCF is another type of generator that uses power electronics to adjust the frequency, e.g., a box that is electrically attached to the generator, but is also very large, heavy, unreliable, and requires more effective cooling.

In accordance with certain embodiments, in order to still produce constant output frequency from a variable speed APU, rather than using an IDG or VSCF system, a doubly-fed induction generator (DFIG) can be used. In the most common implementation of this type of generator, both the rotor and stator have a 3-phase winding, for example. The output frequency of the generator can be based on the sum of the frequency proportional to the rotor speed as well as the frequency applied to the excitation winding of the generator. This way the constant output frequency of the generator can be maintained despite the variable frequency input by applying an appropriate frequency to the exciter winding.

In embodiments, a generator control module can take in a sensed output frequency or rotational speed and modify an excitation input (e.g., increase frequency of excitation for a drop in speed). For example, if rotational frequency drops 5%, a 5% increase can be made to the excitation frequency input to the DFIG 103. Embodiments provide a generator system that is smaller, lighter, and more reliable than other options. Also, control can be all done internally to the generator.

As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the invention as defined in the appended claims.

## Claims

1. An auxiliary power unit "APU" generator system (100) for an APU, comprising:
a doubly-fed induction generator "DFIG" (103) configured to be operatively connected to the APU to be turned by the APU and to have an output frequency that is a function of an excitation frequency and an APU speed; and
a generator control module (105) configured to control the excitation frequency to the DFIG to output a substantially constant frequency with changing APU speed to supply the substantially constant frequency to a load;
**characterized by** further comprising an APU control module configured to control the APU speed to obtain an efficiency of the APU, wherein the efficiency of the APU is an optimum fuel efficiency as a function of one or more environmental conditions, and wherein the one or more environmental conditions include ambient temperature and/or density altitude.

2. The system of claim 1, wherein the generator control module (105) is operatively connected to an output line to sense the output frequency of the DFIG.

3. The system of claim 2 wherein the substantially constant frequency is within about 5% of a set frequency.

4. The system of claim 1, wherein the APU control module is configured to control the APU speed by controlling a fuel flow to the APU.

5. The system of claim 1, further comprising the APU.

6. A method, comprising:
controlling a speed of an auxiliary power unit (APU) system to optimize fuel efficiency as a function of one or more environmental conditions; and
controlling an output frequency of a doubly-fed induction generator (DFIG) turned by the APU system to be substantially constant frequency;
**characterized in that** wherein controlling the speed of the APU system includes controlling a fuel flow to the APU system, and the one or more environmental conditions include ambient temperature and/or density altitude.

7. The method of claim 6, wherein controlling the output frequency of the DFIG includes modifying an excitation frequency to maintain the substantially constant frequency.

8. The method of claim 6 or 7, wherein controlling the output frequency of the DFIG includes sensing the output frequency of the DFIG.

## Patentansprüche

1. Generatorsystem (100) mit Hilfsstromaggregat (auxiliary power unit - APU) für ein APU, umfassend:
einen doppelt gespeisten Induktionsgenerator (doubly-fed induction generator - DFIG) (103), der konfiguriert ist, um betriebsmäßig mit dem APU verbunden zu werden, um durch das APU gedreht zu werden, und eine Ausgabefrequenz aufzuweisen, die eine Funktion einer Erregungsfrequenz und einer APU-Drehzahl ist; und
ein Generatorsteuermodul (105), das konfiguriert ist, um die Erregungsfrequenz für den DFIG zu steuern, um eine im Wesentlichen konstante Frequenz bei wechselnder APU-Drehzahl auszugeben, um die im Wesentlichen konstante Frequenz an eine Last zu liefern;
**dadurch gekennzeichnet, dass** es ferner ein APU-Steuermodul umfasst, das konfiguriert ist, um die APU-Drehzahl zu steuern, um einen Wirkungsgrad des APU zu erlangen, wobei der Wirkungsgrad des APU ein optimaler Kraftstoffwirkungsgrad in Abhängigkeit von einer oder mehreren Umgebungsbedingungen ist, und wobei die eine oder die mehreren Umgebungsbedingungen die Umgebungstemperatur und/oder die Dichtehöhe beinhalten.

2. System nach Anspruch 1, wobei das Generatorsteuermodul (105) betriebsmäßig mit einer Ausgabeleitung verbunden ist, um die Ausgabefrequenz des DFIG zu erfassen.

3. System nach Anspruch 2, wobei die im Wesentlichen konstante Frequenz innerhalb von etwa 5 % einer eingestellten Frequenz liegt.

4. System nach Anspruch 1, wobei das APU-Steuermodul konfiguriert ist, um die APU-Drehzahl durch Steuern eines Kraftstoffflusses zu dem APU zu steuern.

5. System nach Anspruch 1, ferner umfassend das APU.

6. Verfahren, umfassend:
Steuern einer Drehzahl eines Systems mit Hilfsstromaggregat (APU), um den Kraftstoffwirkungsgrad in Abhängigkeit von einer oder mehreren Umgebungsbedingungen zu optimieren; und
Steuern einer Ausgabefrequenz eines doppelt gespeisten Induktionsgenerators (DFIG), der durch das APU-System gedreht wird, um eine im Wesentlichen konstante Frequenz zu erreichen;
**dadurch gekennzeichnet, dass** Steuern der Drehzahl des APU-Systems Steuern eines Kraftstoffflusses zu dem APU-System beinhaltet, und dass die eine oder die mehreren Umgebungsbedingungen die Umgebungstemperatur und/oder die Dichtehöhe beinhalten.

7. Verfahren nach Anspruch 6, wobei Steuern der Ausgabefrequenz des DFIG Ändern einer Erregungsfrequenz beinhaltet, um eine im Wesentlichen konstante Frequenz beizubehalten.

8. Verfahren nach Anspruch 6 oder 7, wobei Steuern der Ausgabefrequenz des DFIG Erfassen der Ausgabefrequenz des DFIG beinhaltet.

## Revendications

1. Système de générateur d'unité de puissance auxiliaire « APU » (100) pour une APU, comprenant :
un générateur à double alimentation « DFIG » (103) configuré pour être connecté fonctionnellement à l'APU pour être mis en rotation par l'APU et pour avoir une fréquence de sortie qui est une fonction d'une fréquence d'excitation et d'une vitesse d'APU ; et
un module de commande de générateur (105) configuré pour commander la fréquence d'excitation du DFIG pour délivrer une fréquence sensiblement constante avec une vitesse d'APU changeante pour fournir la fréquence sensiblement constante à une charge ;
**caractérisé en ce qu'**il comprend également un module de commande d'APU configuré pour commander la vitesse d'APU pour obtenir une efficacité de l'APU, dans lequel l'efficacité de l'APU est une efficacité énergétique optimale en fonction d'une ou de plusieurs conditions environnementales, et dans lequel l'une ou les plusieurs conditions environnementales comportent la température ambiante et/ou la densité-altitude.

2. Système selon la revendication 1, dans lequel le module de commande de générateur (105) est connecté fonctionnellement à une ligne de sortie pour détecter la fréquence de sortie du DFIG.

3. Système selon la revendication 2 dans lequel la fréquence sensiblement constante se situe à environ 5 % d'une fréquence définie.

4. Système selon la revendication 1, dans lequel le module de commande d'APU est configuré pour commander la vitesse d'APU en commandant un débit de carburant vers l'APU.

5. Système selon la revendication 1, comprenant également l'APU.

6. Procédé, comprenant :
la commande d'une vitesse d'un système d'unité de puissance auxiliaire (APU) pour optimiser l'efficacité énergétique en fonction d'une ou de plusieurs conditions environnementales ; et
la commande d'une fréquence de sortie d'un générateur à double alimentation (DFIG) mis en rotation par le système APU pour devenir une fréquence sensiblement constante ;
**caractérisé en ce que** la commande de la vitesse du système APU comporte la commande d'un débit de carburant vers le système APU, et l'une ou les plusieurs conditions environnementales comportent la température ambiante et/ou la densité-altitude.

7. Procédé selon la revendication 6, dans lequel la commande de la fréquence de sortie du DFIG comporte la modification d'une fréquence d'excitation pour maintenir la fréquence sensiblement constante.

8. Procédé selon la revendication 6 ou 7, dans lequel la commande de la fréquence de sortie du DFIG comporte la détection de la fréquence de sortie du DFIG.
